# EUROPÄISCHE PATENTSCHRIFT

(11) **EP 1 306 590 B1**
(45) Veröffentlichungstag und Bekanntmachung des Hinweises auf die Patenterteilung: **04.08.2004**
(21) Anmeldenummer: 02023074.4
(22) Anmeldetag: 17.10.2002
(51) Int. Cl.: F16J 15/12

(54) **Dichtung**
Gasket
Joint

(30) Priorität: 25.10.2001 DE 10152797
(43) Veröffentlichungstag der Anmeldung: 02.05.2003
(73) Patentinhaber: ElringKlinger AG, 72581 Dettingen (DE)
(72) Erfinder: Fritz, Wolfgang, 72555 Metzingen (DE)
(74) Vertreter: HOEGER, STELLRECHT & PARTNER Patentanwälte

(56) Entgegenhaltungen:
- EP-A- 0 383 993
- DE-A- 19 923 248
- FR-A- 1 414 951
- FR-A- 2 426 506
- US-A- 5 348 311
- US-A- 5 671 927
- PATENT ABSTRACTS OF JAPAN vol. 007, no. 041 (M-194), 18. Februar 1983 (1983-02-18) & JP 57 190736 A (RIYOUTA KAMAKARI), 24. November 1982 (1982-11-24)

## Beschreibung

Die vorliegende Erfindung betrifft eine mehrlagige Dichtung, welche mindestens eine erste Lage und eine zweite Lage und mindestens eine Verbindungseinrichtung zum Verbinden der Lagen der Dichtung miteinander umfaßt.

Solche mehrlagigen Dichtungen sind aus dem Stand der Technik bekannt siehe z.B. US-A-5 348 311.

Insbesondere ist es bekannt, die Lagen einer mehrlagigen Dichtung durch Vernieten oder Durchsetzfügen miteinander zu verbinden.

Bei diesen Verbindungsarten entsteht jedoch bei der Herstellung der Verbindung ein Materialauftrag senkrecht zu den Hauptflächen der Dichtung, so daß die durch Nieten oder Durchsetzfügen hergestellten Verbindungseinrichtungen außerhalb des gepreßten Bereichs der Dichtung angeordnet werden müssen. Häufig müssen an den Lagen der Dichtung zusätzliche Laschen außerhalb des gepreßten Bereichs der Dichtung vorgesehen werden, um die Verbindungseinrichtungen im Bereich dieser Laschen unterbringen zu können, was zu erhöhtem Materialverbrauch und zu einer Verletzungsgefahr aufgrund der überstehenden Laschen führen kann.

Ferner ist es bekannt, die Lagen einer mehrlagigen Dichtung durch Verschweißen miteinander zu verbinden. Dieses Verbindungsverfahren kann jedoch nicht angewandt werden, wenn die Lagen der Dichtung, beispielsweise mit einem Elastomer, beschichtet sind, weil die Beschichtung durch das Verschweißen zerstört wird. Außerdem ist das Verschweißen nicht möglich oder führt zu unzuverlässigen Ergebnissen, wenn eine oder mehrere der Lagen der Dichtung aus Nichtmetallen gebildet sind.

Der vorliegenden Erfindung liegt daher die Aufgabe zugrunde, eine mehrlagige Dichtung der eingangs genannten Art zu schaffen, bei welcher die Lagen der Dichtung in einfacher und zuverlässiger Weise miteinander verbunden sind.

Diese Aufgabe wird bei einer Dichtung mit den Merkmalen des Oberbegriffs von Anspruch 1 erfindungsgemäß dadurch gelöst, daß die Verbindungseinrichtung mindestens zwei Durchgangsöffnungen in der ersten Lage, mindestens eine Durchgangsöffnung in der zweiten Lage und ein separat von der ersten Lage und der zweiten Lage ausgebildetes Verbindungselement umfaßt, wobei das Verbindungselement die Durchgangsöffnungen der ersten Lage und die Durchgangsöffnung der zweiten Lage durchgreift und einen Haltebereich der zweiten Lage so hintergreift, daß die erste Lage, die zweite Lage und das Verbindungselement durch Formschluß gegen ein Auseinanderbewegen gesichert sind.

Der erfindungsgemäßen Lösung liegt somit das Konzept zugrunde, ein separat von der ersten Lage und der zweiten Lage ausgebildetes Verbindungselement durch die Durchgangsöffnungen der ersten Lage und durch die Durchgangsöffnung der zweiten Lage hindurchzustecken und anschließend durch Aufbiegen, Spreizen und/oder Stauchen so zu verformen, daß ein Teilbereich des Verbindungselements einen Haltebereich der zweiten Lage der Dichtung so hintergreift, daß der Haltebereich das Verbindungselement am Herausbewegen aus den Durchgangsöffnungen hindert und somit die erste Lage, die zweite Lage und das Verbindungselement durch Formschluß gegen ein Auseinanderbewegen dieser Elemente der Dichtung gesichert sind.

Dabei kann die mehrlagige Dichtung außer der ersten Lage und der zweiten Lage noch eine beliebige Anzahl weiterer Lagen umfassen, welche vorzugsweise zwischen der ersten Lage und der zweiten Lage angeordnet sind.

Es wäre denkbar, daß die beiden Durchgangsöffnungen in der ersten Lage durch einen Durchgangskanal miteinander verbunden sind und somit zwei Teilbereiche eines zusammenhängenden Durchgangslochs in der ersten Lage bilden.

Vorzugsweise ist jedoch vorgesehen, daß die beiden Durchgangsöffnungen der ersten Lage separat voneinander ausgebildet sind.

Die erfindungsgemäße Lösung bietet den Vorteil, daß kein Schweißvorgang zur Herstellung der Verbindung erforderlich ist, so daß die erfindungsgemäße Verbindungseinrichtung insbesondere auch dann eingesetzt werden kann, wenn eine oder mehrere Lagen der Dichtung ein- oder beidseitig mit einer Beschichtung versehen sind.

Bei einer besonderen Ausgestaltung der Erfindung ist vorgesehen, daß das Verbindungselement mindestens eine Lasche umfaßt, die in die Ebene der zweiten Lage hinein verformt ist.

Besonders günstig ist es, wenn das Verbindungselement mindestens zwei Laschen und einen zwischen den Laschen angeordneten Mittelbereich umfaßt.

Insbesondere kann vorgesehen sein, daß dieser Mittelbereich in der Durchgangsöffnung der zweiten Lage der Dichtung aufgenommen ist.

Bei einer bevorzugten Ausgestaltung der Erfindung ist vorgesehen, daß der Mittelbereich des Verbindungselements an einem zwischen den Durchgangsöffnungen der ersten Lage ausgebildeten Steg anliegt.

In Bezug auf die Anordnung des Haltebereichs ist es besonders günstig, wenn der Haltebereich der zweiten Lage aus der Ebene der zweiten Lage heraus in die Ebene der ersten Lage oder in die Ebene einer zwischen der ersten Lage und der zweiten Lage angeordneten Lage der Dichtung hinein verformt ist, falls die Dichtung außer der ersten Lage und der zweiten Lage noch mindestens eine weitere Lage umfaßt.

Um zu verhindern, daß die Anordnung des Verbindungselements an der Dichtung zu einem Materialauftrag im Bereich der Verbindungseinrichtung führt, ist es von Vorteil, wenn mindestens eine Oberfläche des Verbindungselements im wesentlichen bündig mit einer Randfläche, das heißt mit einer oberen oder unteren Deckfläche, der Dichtung ist.

Besonders günstig ist es, wenn eine Oberseite des Verbindungselements im wesentlichen bündig mit einer Oberseite der Dichtung und eine Unterseite des Verbindungselements im wesentlichen bündig mit einer Unterseite der Dichtung ist.

Vorzugsweise ist vorgesehen, daß die Verbindungseinrichtung in einem im montierten Zustand der Dichtung gepreßten Bereich der Dichtung angeordnet ist.

Dies ist insbesondere dann möglich, wenn die Verbindungseinrichtung so ausgestaltet ist, daß sie keinen Materialauftrag über die Randflächen der Dichtung hinaus bildet.

Die Anordnung der Verbindungseinrichtung im gepreßten Bereich der Dichtung führt dazu, daß auf zusätzliche Laschen an der Außenkontur der Dichtung, welche sonst zur Anordnung der Verbindungseinrichtungen vorgesehen sind, verzichtet werden kann. Dies wiederum führt dazu, daß die Außenkonturen der Dichtung nicht über die abzudichtenden Bauteile überstehen, so daß die aus der Dichtung und aus den abzudichtenden Bauteilen gebildete Bauteilgruppe eine gefälligere Gestalt erhält.

Außerdem entfällt die Gefahr von Verletzungen durch über die abzudichtenden Bauteile überstehende Außenkonturen der Dichtung.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische Draufsicht auf eine mehrlagige Flachdichtung;
- Fig. 2: eine vergrößerte Darstellung des Bereichs I aus der Fig. 1;
- Fig. 3: einen schematischen Schnitt längs der Linie 3 - 3 in Fig. 2;
- Fig. 4: einen schematischen Schnitt längs der Linie 4 - 4 in Fig. 2;
- Fig. 5: einen schematischen Schnitt längs der Linie 5 - 5 in Fig. 2;
- Fig. 6: eine schematische Draufsicht auf eine Verbindungseinrichtung in einer ersten Herstellungsphase;
- Fig. 7: einen schematischen Schnitt längs der Linie 7 - 7 in Fig. 6;
- Fig. 8: einen schematischen Schnitt längs der Linie 8 - 8 in Fig. 6;
- Fig. 9: eine schematische Draufsicht auf die Verbindungseinrichtung in einer zweiten Herstellungsphase;
- Fig. 10: einen schematischen Schnitt längs der Linie 10 - 10 in Fig. 9; und
- Fig. 11: einen schematischen Schnitt längs der Linie 11 - 11 in Fig. 9.

Gleiche oder funktional äquivalente Elemente sind in allen Figuren mit denselben Bezugszeichen bezeichnet.

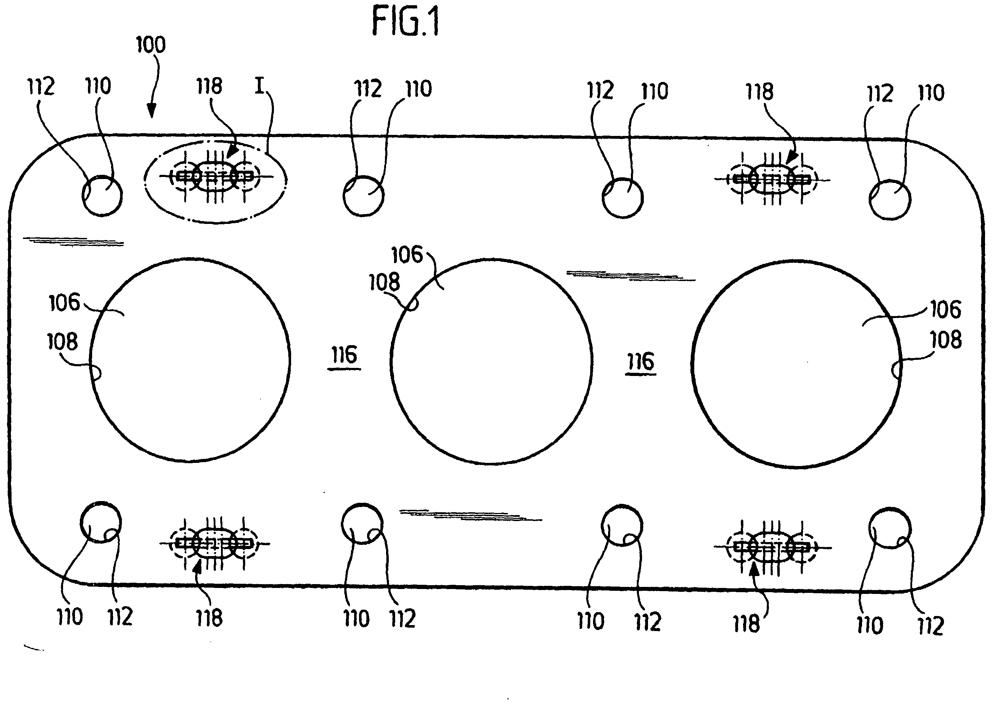

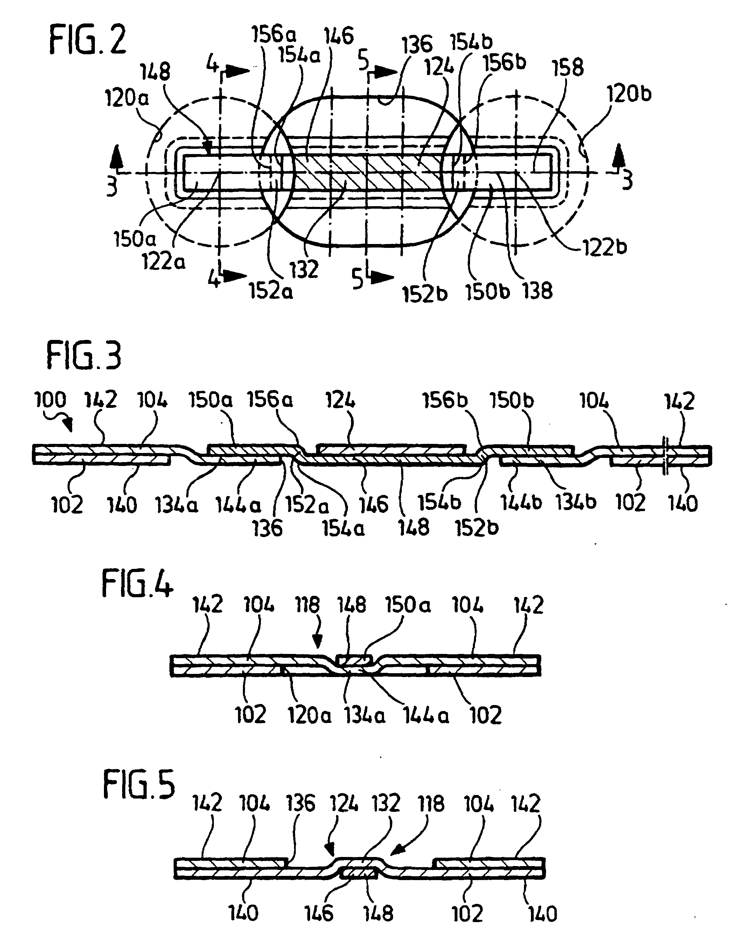

Eine in den Fig. 1 bis 5 dargestellte, als Ganzes mit 100 bezeichnete Flachdichtung umfaßt, wie am bestem aus Fig. 3 zu ersehen ist, zwei übereinander angeordnete Lagen, nämlich eine erste Lage 102 und eine über derselben angeordnete, an der ersten Lage 102 flächig anliegende Lage 104.

Die Lagen 102 und 104 umfassen vorzugsweise ein elastisches metallisches Material, insbesondere ein Federstahlblech, und können mit einer Beschichtung, insbesondere mit einer Beschichtung aus einem Elastomer, wie beispielsweise Nitrilbutadienkautschuk (NBR), versehen sein.

Jede der Lagen 102, 104 weist die Form einer im wesentlichen ebenen Platte auf, aus welcher durch Ausstanzen im folgenden näher beschriebene Durchgangsöffnungen ausgebildet sind.

Die Flachdichtung 100 ist dafür vorgesehen, zwischen zwei (nicht dargestellten) abzudichtenden Elementen, beispielsweise zwischen einem Motorblock und einem Zylinderkopf, angeordnet zu werden, wobei die Flachdichtung 100 mit Fluid-Durchgangskanälen 106 versehen ist, die aus miteinander fluchtenden Fluidkanal-Durchgangsöffnungen 108 in der ersten Lage 102 und der zweiten Lage 104 gebildet sind, um den Durchtritt eines Fluids durch die Flachdichtung 100 zu ermöglichen.

Unter einem Fluid ist in dieser Beschreibung und in den beigefügten Ansprüchen jedes beliebige fluide Medium, einschließlich Flüssigkeiten und Gasen, zu verstehen.

Um die Abdichtung der Fluidkanäle 106 zu verbessern, können dieselben von (nicht dargestellten) Sicken ringförmig umgeben sein, welche in der ersten Lage 102 und/oder in der zweiten Lage 104 ausgebildet sind.

Die beiden Bauteile, zwischen welchen die Flachdichtung 100 angeordnet wird, werden durch geeignete Befestigungsmittel, beispielsweise durch Zylinderkopfschrauben und darauf angeordnete Muttern, gegeneinander verspannt, um den für eine ausreichende Dichtigkeit erforderlichen Anpressdruck zu erzeugen.

Zur Aufnahme dieser Befestigungsmittel sind an der Flachdichtung 100 mehrere, beispielsweise acht, Befestigungsmittelkanäle 110 vorgesehen, welche jeweils aus miteinander fluchtenden Befestigungsmittelkanal-Durchgangsöffnungen 112 in der ersten Lage 102 und in der zweiten Lage 104 gebildet sind.

Der zwischen den Befestigungsmittelkanälen 110 liegende Bereich der Flachdichtung 100 bildet einen gepreßten Bereich 116 der Flachdichtung 100.

Innerhalb des gepreßten Bereichs 116 sind an der Flachdichtung 100 mehrere, beispielsweise vier, Verbindungseinrichtungen 118 zum Verbinden der beiden Lagen der Flachdichtung 100 miteinander vorgesehen, deren Aufbau nachstehend unter Bezugnahme auf die Fig. 2 bis 5 näher beschrieben werden wird.

Wie am besten aus Figur 2 zu ersehen ist, umfaßt jede der Verbindungseinrichtungen 118 zwei Durchgangsöffnungen 120a und 120b, die beide als im wesentlichen kreisförmige Durchgangslöcher in der ersten Lage 102 ausgebildet sind.

Der zwischen den beiden Durchgangsöffnungen 120a, 120b liegende Bereich der ersten Lage 102 bildet einen Steg 124, welcher zumindest bereichsweise aus der Ebene der ersten Lage 102 heraus in die Ebene der zweiten Lage 104 hinein gebogen ist und einen (in Fig. 2 schraffiert dargestellten) Überlappungsbereich 132 aufweist, welcher einen Mittelbereich 146 eines separat von der ersten Lage 102 und von der zweiten Lage 104 ausgebildeten, im wesentlichen streifenförmigen Verbindungselements 148 hintergreift.

Wie am besten aus Fig. 3 zu ersehen ist, ist der Mittelbereich 146 des Verbindungselements 148 zwischen zwei die beiden Enden des Verbindungselements 148 bildenden Laschen 150a, 150b angeordnet, wobei die linke Lasche 150a über einen Übergangsbereich 152a, welcher längs einer ersten Biegelinie 154a an den Mittelbereich 146 und längs einer zweiten Biegelinie 156a an die Lasche 150a angrenzt, mit dem Mittelbereich 146 verbunden ist.

Die rechte Lasche 150b ist über einen Übergangsbereich 152b, welcher längs einer ersten Biegelinie 154b an den Mittelbereich 146 und längs einer zweiten Biegelinie 156b an die Lasche 150b angrenzt, mit dem Mittelbereich 146 verbunden.

Die beiden Laschen 150a, 150b des Verbindungselements 148 hintergreifen jeweils einen seitlichen Randbereich 134a bzw. 134b einer in der zweiten Lage 104 der Flachdichtung 100 ausgebildeten Durchgangsöffnung 136, welche die Form eines ovalen Langlochs mit einer zu der Längsachse 158 des Verbindungselements 148 parallelen Längsachse 138 aufweist.

Unter einem "Randbereich" einer Durchgangsöffnung wird dabei im Rahmen dieser Beschreibung und der Ansprüche ein neben dem Rand der betreffenden Durchgangsöffnung liegender Bereich der Lage, in welcher die Durchgangsöffnung ausgebildet ist, verstanden.

Wie aus Fig. 3 zu ersehen ist, sind die seitlichen Randbereiche 134, 134b der Durchgangsöffnung 136 aus der Ebene der zweiten Lage 104 heraus in die Ebene der ersten Lage 102 der Flachdichtung 100 hinein gebogen.

Die Unterseiten dieser seitlichen Randbereiche 134a, 134b sind im wesentlichen bündig mit der Unterseite 140 der ersten Lage 102.

Die Oberseite des Überlappungsbereichs 132 des Stegs 124 ist im wesentlichen bündig mit der Oberseite 142 der zweiten Lage 104.

Ebenso sind die Oberseiten der Laschen 150a, 150b des Verbindungselements 148 im wesentlichen bündig mit der Oberseite 142 der zweiten Lage 104.

Die Unterseite des Mittelbereichs 146 des Verbindungselements 148 ist hingegen im wesentlichen bündig mit der Unterseite 140 der ersten Lage 102.

Dadurch, daß die Randflächen (d.h. die oberen und unteren Deckflächen) der Verbindungseinrichtung 118 mit den Randflächen der Lagen 102 und 104 der Flachdichtung 100 im wesentlichen bündig sind, bildet die Verbindungseinrichtung 118 keinen Materialauftrag, so daß diese Verbindungseinrichtung 118 ohne weiteres innerhalb des gepreßten Bereiches 116 der Flachdichtung 100 angeordnet werden kann.

Dadurch, daß die Laschen 150a, 150b des Verbindungselements 148 die seitlichen Randbereiche 134a, 134b der Durchgangsöffnung 136 in der zweiten Lage 104 hintergreifen und dadurch, daß der Steg 124 der ersten Lage 102 den Mittelbereich 146 des Verbindungselements 148 hintergreift, sind die erste Lage 102, die zweite Lage 104 und das Verbindungselement 148 durch Formschluß gegen ein Auseinanderbewegen dieser Elemente der Flachdichtung 100 gesichert.

Die seitlichen Randbereiche 134a, 134b bilden somit Haltebereiche 144a, 144b, welche das Verbindungselement 148 in seiner teilweise in die Ebene der zweiten Lage 104 hinein gebogenen Stellung halten.

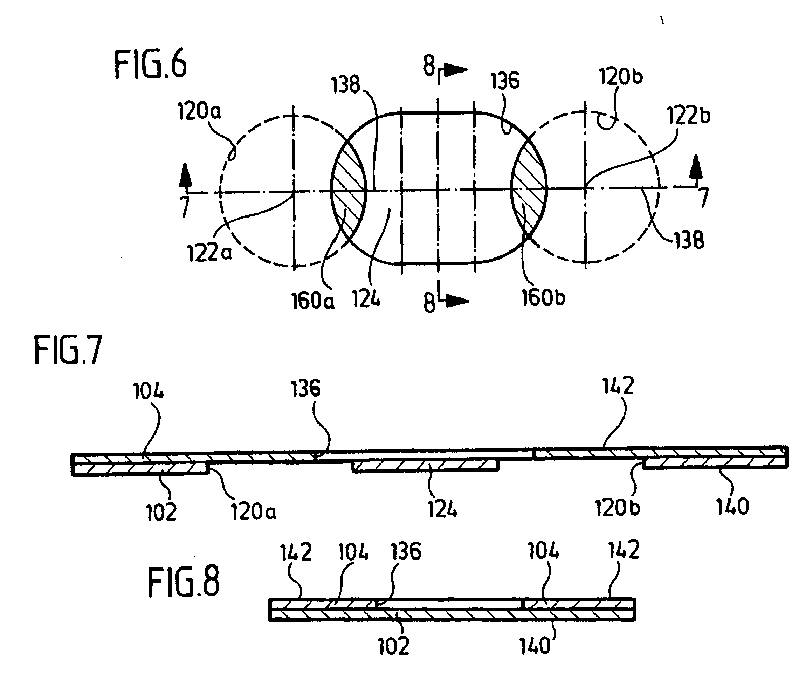

Das Verfahren zur Herstellung der vorstehend beschriebenen Verbindungseinrichtung 118 wird im folgenden unter Bezugnahme auf die Fig. 6 bis 11 erläutert:

Zunächst werden die beiden Durchgangsöffnungen 120a, 120b in der ersten Lage 102 der Flachdichtung 100 und die Durchgangsöffnung 136 in der zweiten Lage 104 der Flachdichtung 100 durch Ausstanzen aus der jeweiligen Lage erzeugt.

Wie aus den Fig. 6 bis 8 zu ersehen ist, werden die erste Lage 102 und die zweite Lage 104 anschließend so übereinander positioniert, daß die Längsachse 138 der Durchgangsöffnung 136 der zweiten Lage 104 die senkrecht zu den Hauptflächen der Flachdichtung 100 ausgerichteten Mittelachsen 122a bzw. 122b der Durchgangsöffnungen 120a, 120b der ersten Lage 102 schneidet.

Ferner ist die Durchgangsöffnung 136 mittig zwischen den Mittelachsen 122a, 122b der Durchgangsöffnungen 120a, 120b der ersten Lage 102 angeordnet.

Der Steg 124, der zwischen den Durchgangsöffnungen 120a und 120b der ersten Lage 102 ausgebildet ist, kommt dabei unter der Durchgangsöffnung 136 der zweiten Lage 104 zu liegen. Wie aus Fig. 6 zu ersehen ist, ist die Breite des Stegs 124 zumindest im zentralen Bereich des Stegs 124 geringer als die Länge der Durchgangsöffnung 136.

Die Durchgangsöffnungen 120a, 120b einerseits und die Durchgangsöffnung 136 andererseits überlappen sich in den in Fig. 6 schraffiert dargestellten Bereichen und bilden somit die Flachdichtung 100 durchsetzende Durchtrittskanäle 160a und 160b.

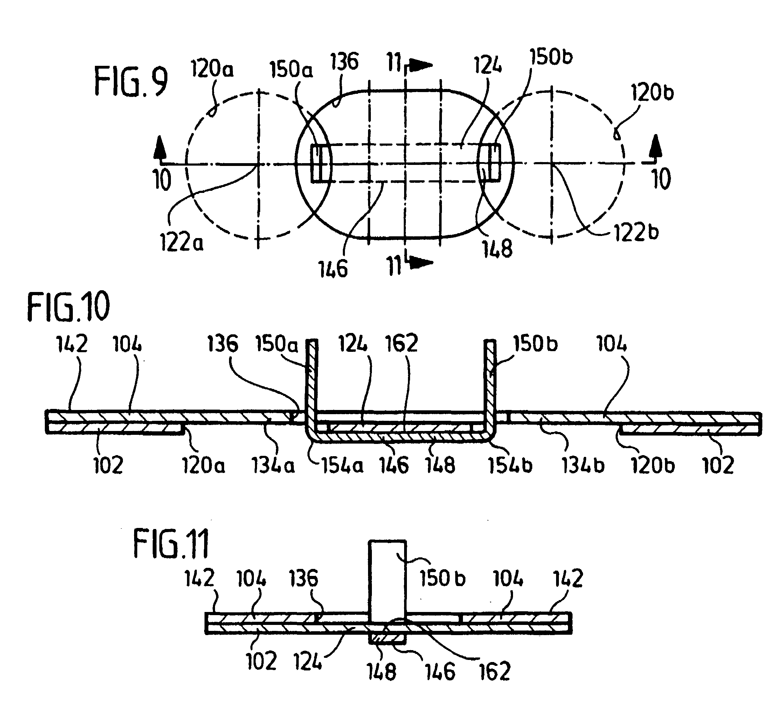

In einem nächsten, in den Fig. 9 bis 11 dargestellten Verfahrensschritt werden durch diese Durchtrittskanäle 160a, 160b die Laschen 150a, 150b des sich in einem Ausgangszustand befindlichen Verbindungselements 148 hindurchgesteckt, wobei eine der ersten Lage 102 der Flachdichtung 100 zugewandte Oberseite 162 des Mittelbereichs 146 des Verbindungselements 148 flächig an der Unterseite des Stegs 124 der ersten Lage 102 anliegt.

Wie aus den Fig. 10 und 11 zu ersehen ist, sind die Laschen 150a, 150b des Verbindungselements 148 in dessen Ausgangszustand im wesentlichen senkrecht zu dem Mittelbereich 146 und im wesentlichen senkrecht zu den Hauptflächen der Flachdichtung 100 ausgerichtet und grenzen längs der ersten Biegelinien 154a, 154b an den Mittelbereich 146 an.

In einem letzten Verfahrensschritt werden die Laschen 150a, 150b des Verbindungselements 148 mittels eines (nicht dargestellten) Umlegestempels um einen Winkel von ungefähr 90° umgebogen und in die Ebene der zweiten Lage 104 hinein gepreßt, wobei die seitlichen Randbereiche 134a, 134b der Durchgangsöffnung 136 der zweiten Lage 104 in die Ebene der ersten Lage 102 hinein verformt werden, so daß die in den Figuren 2 bis 5 dargestellte Endkonfiguration der Verbindungseinrichtung 118 erreicht wird.

Um die seitlichen Randbereiche 134a, 134b in die Ebene der ersten Lage 102 hinein verformen zu können, wird die Länge der Laschen 150a, 150b so gewählt, daß die dem Mittelbereich 146 abgewandten Enden der Laschen 150a, 150b vollständig über den Durchgangsöffnungen 120a, 120b der ersten Lage 102 zu liegen kommen und nicht über dieselben überstehen.

Bei diesem Umbiegen der Laschen 150a, 150b um die zweiten Biegelinien 156a, 156b werden zugleich die Übergangsbereiche 152a, 152b des Verbindungselements 148 ausgebildet, welche sich in der Endkonfiguration der Verbindungseinrichtung 118 aus der Ebene der ersten Lage 102 in die Ebene der zweiten Lage 104 erstrecken.

Zugleich mit dem Umlegen der Laschen 150a, 150b werden der Mittelbereich 146 und der Überlappungsbereich 132 des Stegs 124 mittels eines (nicht dargestellten) Durchdrückstempels zu der Ebene der zweiten Lage 104 der Flachdichtung 100 hin verformt, so daß in der Endkonfiguration der Verbindungseinrichtung 118 der Überlappungsbereich 132 des Stegs 124 in der Ebene der zweiten Lage 104 und der Mittelbereich 146 des Verbindungselements 148 in der Ebene der ersten Lage 102 zu liegen kommt.

Damit ist die Herstellung der Verbindungseinrichtung 118 abgeschlossen.

## Patentansprüche

1. Mehrlagige Dichtung, umfassend mindestens eine erste Lage (102) und eine zweite Lage (104) und mindestens eine Verbindungseinrichtung (118) zum Verbinden der Lagen der Dichtung (100) miteinander,
**dadurch gekennzeichnet,**
**daß** die Verbindungseinrichtung (118) mindestens zwei Durchgangsöffnungen (120a, 120b) in der ersten Lage (102), mindestens eine Durchgangsöffnung (136) in der zweiten Lage (104) und ein separat von der ersten Lage (102) und der zweiten Lage (104) ausgebildetes Verbindungselement (148) umfaßt, wobei das Verbindungselement (148) die Durchgangsöffnungen (120a, 120b) der ersten Lage (102) und die Durchgangsöffnung (136) der zweiten Lage (104) durchgreift und einen Haltebereich (144a, 144b) der zweiten Lage (104) so hintergreift, daß die erste Lage (102), die zweite Lage (104) und das Verbindungselement (148) durch Formschluß gegen ein Auseinanderbewegen gesichert sind.

2. Dichtung nach Anspruch 1, **dadurch gekennzeichnet, daß** das Verbindungselement (148) mindestens eine Lasche (150a, 150b) umfaßt, die in die Ebene der zweiten Lage (104) hinein verformt ist.

3. Dichtung nach einem der Ansprüche 1 oder 2, **dadurch gekennzeichnet, daß** das Verbindungselement (148) mindestens zwei Laschen (150a, 150b) und einen zwischen den Laschen angeordneten Mittelbereich (146) umfaßt.

4. Dichtung nach Anspruch 3, **dadurch gekennzeichnet, daß** der Mittelbereich (146) in der Durchgangsöffnung (136) der zweiten Lage (104) aufgenommen ist.

5. Dichtung nach einem der Ansprüche 3 oder 4, **dadurch gekennzeichnet, daß** der Mittelbereich (146) des Verbindungselements (148) an einem zwischen den Durchgangsöffnungen (120a, 120b) der ersten Lage (102) ausgebildeten Steg (124) anliegt.

6. Dichtung nach einem der Ansprüche 1 bis 5, **dadurch gekennzeichnet, daß** der Haltebereich (144a, 144b) der zweiten Lage (104) aus der Ebene der zweiten Lage (104) heraus in die Ebene der ersten Lage (102) oder in die Ebene einer zwischen der ersten Lage (102) und der zweiten Lage (104) angeordneten Lage der Dichtung (100) hinein verformt ist.

7. Dichtung nach einem der Ansprüche 1 bis 6, **dadurch gekennzeichnet, daß** mindestens eine Oberfläche des Verbindungselements (148) im wesentlichen bündig mit einer Randfläche (140, 142) der Dichtung (100) ist.

8. Dichtung nach Anspruch 7, **dadurch gekennzeichnet, daß** eine Oberseite des Verbindungselements (148) im wesentlichen bündig mit einer Oberseite (142) der Dichtung (100) und eine Unterseite des Verbindungselements (148) im wesentlichen bündig mit einer Unterseite (140) der Dichtung (100) ist.

9. Dichtung nach einem der Ansprüche 1 bis 8, **dadurch gekennzeichnet, daß** die Verbindungseinrichtung (118) in einem im montierten Zustand der Dichtung gepreßten Bereich (116) der Dichtung (100) angeordnet ist.

## Claims

1. A multilayer seal, comprising at least a first layer (102) and a second layer (104) and at least one connection device (118) for connecting the layers of the seal (100) to each other,
**characterised in that** the connection device (118) comprises at least two through apertures (120a, 120b) in the first layer (102), at least one through aperture (136) in the second layer (104) and a connection element (148) constructed separately from the first layer (102) and the second layer (104), the connection element (148) penetrating the through apertures (120a, 120b) of the first layer (102) and the through aperture (136) of the second layer (104) and engaging behind a retention region (144a, 144b) of the second layer (104) so that the first layer (102), the second layer (104) and the connection element (148) are prevented from moving apart by positive locking.

2. A seal according to Claim 1,
**characterised in that** the connection element (148) comprises at least one cover plate (150a, 150b) which is deformed into the plane of the second layer (104).

3. A seal according to one of Claims 1 or 2,
**characterised in that** the connection element (148) comprises at least two cover plates (150a, 150b) and a central region (146) disposed between the cover plates.

4. A seal according to Claim 3,
**characterised in that** the central region (146) is housed in the through aperture (136) of the second layer (104).

5. A seal according to one of Claims 3 or 4,
**characterised in that** the central region (146) of the connection element (148) is adjacent to a web (124) constructed between the through apertures (120a, 120b) of the first layer (102).

6. A seal according to one of Claims 1 to 5,
**characterised in that** the retention region (144a, 144b) of the second layer (104) is deformed out of the plane of the second layer (104) into the plane of the first layer (102) or into the plane of a layer of the seal (100) disposed between the first layer (102) and the second layer (104).

7. A seal according to one of Claims 1 to 6,
**characterised in that** at least one surface of the connection element (148) is substantially flush with an edge face (140, 142) of the seal (100).

8. A seal according to Claim 7,
**characterised in that** an upper side of the connection element (148) is substantially flush with an upper side (142) of the seal (100) and an under side of the connection element (148) is substantially flush with an under side (140) of the seal (100).

9. A seal according to one of Claims 1 to 8,
**characterised in that** the connection device (118) is disposed in a region (116) of the seal (100) which is pressed in the mounted state of the seal.

## Revendications

1. Joint d'étanchéité multicouche comportant au moins une première couche (102) et une deuxième couche (104) et au moins un dispositif de liaison (118) pour relier les couches du joint (100) l'une à l'autre,
**caractérisé en ce que**
le dispositif de liaison (118) comprend au moins deux ouvertures traversantes (120a, 120b) dans la première couche (102), au moins une ouverture traversante (136) dans la deuxième couche (104) et un élément de liaison (148) réalisé séparément de la première couche (102) et de la deuxième couche (104), l'élément de liaison (148) traversant les ouvertures traversantes (120a, 120b) de la première couche (102) et l'ouverture traversante (136) de la deuxième couche (104) et engageant par l'arrière une zone de retenue (144a, 144b) de la deuxième couche (104) de telle sorte que la première couche (102), la deuxième couche (104) et l'élément de liaison (148) sont bloqués par coopération de formes à l'encontre d'un écartement.

2. Joint selon la revendication 1, **caractérisé en ce que** l'élément de liaison (148) comprend au moins une patte (150a, 150b) qui est déformée en s'intégrant dans le plan de la deuxième couche (104).

3. Joint selon l'une ou l'autre des revendications 1 et 2, **caractérisé en ce que** l'élément de liaison (148) comprend au moins deux pattes (150a, 150b) et une zone centrale (146) agencée entre les deux pattes.

4. Joint selon la revendication 3, **caractérisé en ce que** la zone centrale (146) est reçue dans l'ouverture traversante (136) de la deuxième couche (104).

5. Joint selon l'une ou l'autre des revendications 3 et 4, **caractérisé en ce que** la zone centrale (146) de l'élément de liaison (148) s'appuie contre une barrette (124) réalisée entre les ouvertures traversantes (120a, 120b) de la première couche (102).

6. Joint selon l'une des revendications 1 à 5, **caractérisé en ce que** la zone de retenue (144a, 144b) de la deuxième couche (104) est formée en sortant du plan de la deuxième couche (104) pour s'intégrer dans le plan de la première couche (102) ou dans le plan d'une couche du joint (100) agencée entre la première couche (102) et la deuxième couche (104).

7. Joint selon l'une des revendications 1 à 6, **caractérisé en ce qu'**au moins une surface de l'élément de liaison (148) est sensiblement en affleurement avec une surface de bord (140, 142) du joint (100).

8. Joint selon la revendication 7, **caractérisé en ce qu'**une face supérieure de l'élément de liaison (148) est sensiblement en affleurement avec une face supérieure (142) du joint (100), et une face inférieure de l'élément de liaison (148) est sensiblement en affleurement avec une face inférieure (140) du joint (100).

9. Joint selon l'une des revendications 1 à 8, **caractérisé en ce que** le dispositif de liaison (118) est agencé dans une zone (116) du joint (100) qui est comprimée dans l'état monté du joint.
